# EUROPEAN PATENT SPECIFICATION

(11) **EP 2 216 973 B1**
(45) Date of publication and mention of the grant of the patent: **13.11.2019**
(21) Application number: 09305115.9
(22) Date of filing: 06.02.2009
(51) Int. Cl.: H04M 3/436, H04M 3/42, H04M 1/64

(54) **A method to silently answer a call using different languages**
Verfahren zum stummen beantworten eines Anrufs unter Verwendung unterschiedlicher Sprachen
Procédé de résponse silencieux d'un appel utilisant différentes langues

(43) Date of publication of application: 11.08.2010
(73) Proprietor: Orange, 75015 Paris (FR)
(72) Inventor: Rahman, Syed, LONDON, SW16 5EJ (GB); Stienne, David, LONDON, W4 3NT (GB)
(74) Representative: Vidon Brevets & Stratégie

(56) References cited:
- EP-A- 0 719 019
- WO-A-02/05527
- DE-A1- 10 016 019
- DE-A1-102004 054 808
- US-A- 6 018 671
- US-A1- 2003 078 033

## Description

### FIELD OF THE PRESENT SYSTEM:

The present invention generally relates to telecommunications, and more specifically to the delivery of enhanced communications services.

### BACKGROUND OF THE PRESENT SYSTEM:

Subscribers or users to telecommunication networks are nowadays offered an ever increasing number of enhanced communication features or services. Among know services, one can find voice mail, call forwarding, call waiting and Caller ID presentation. Caller ID for instance is a very popular feature as it allows a callee to identify the caller (or calling party) and can choose not to answer the call based on the identity of the caller. A call rejection function, rejection function in short, is another feature that allows a callee to silently inform a caller through the provision of a text or voice message that the incoming call (from the caller) will not be answered immediately.

This function may be helpful for instance in meetings. FIG. 1 is an illustration of a know rejection function as described in WO 0205527. The rejection function may be activated prior to its use, or upon receiving a call through for instance a popup menu or simply when hanging up the call. A called party, or callee, may be presented with the rejection function through a menu 111 of rejection messages after receiving an incoming call for a calling party (or caller), if the rejection function is activated. The activation of the rejection function may also cause the device 101 to switch to a silent mode ringtone which can signal an incoming call, typically by vibrating the device, without making an noise. The caller may elect to send systematically the same text to all callers, or provided the caller ID presentation is available for his device 101, he can choose one text in the list of text 111 that is most suitable to the caller as identified through his caller ID.

The rejection function may be available to a telecommunication device through uploading a client that offers the selection of a plurality of default or predefined messages to a called party. The rejection function may also be embedded with the device.

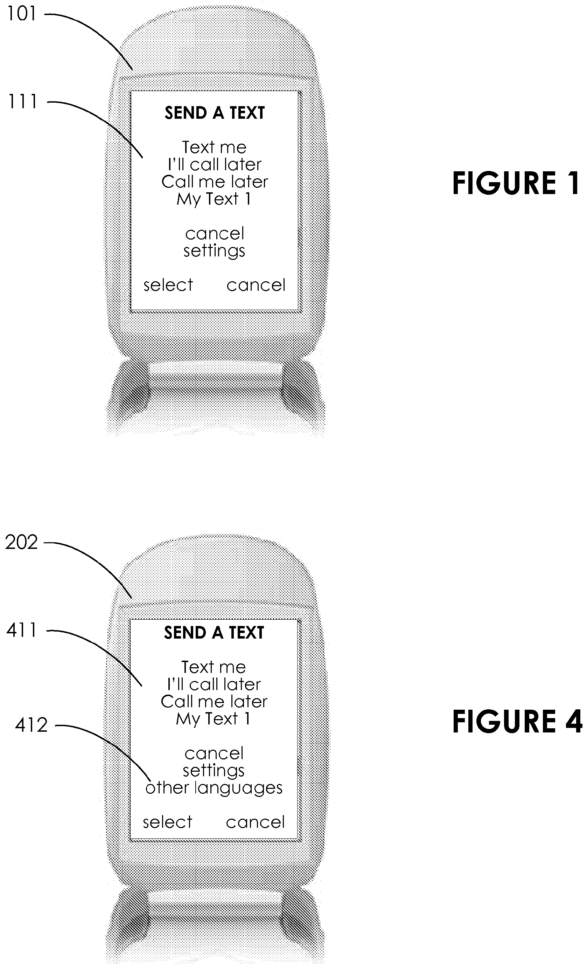

As seen in FIG.1, the caller may use the default texts that are listed by the client or can generate text or voice messages of his own, and add them to the list of possible rejection messages. WO 0205527 also describes that the callee can choose to add some texts in different languages. Thus he can himself select a rejection text in an alternative language when identifying that the caller would rather receive a rejection text in this alternative language.

Document WO 0205527 discloses therefore a method to silently inform through a rejection function a calling party that its incoming call to a called device will not be answered, the rejection function comprising the provision of a rejection message to be sent to the calling party, said method comprising for the called device the acts of receiving the incoming call from the calling party on the called device; and presenting the rejection function in a first language if said rejection function is activated,

Document US2003078033 discloses a system to provide predefined messages in different languages.

A blocking point with such an approach is when the callee may know a lot of users or contacts of different nationality and language. He may have to add as many rejection texts as possible in as many languages as needed. As most telecommunication devices present a small screen, it may become problematic to handle in a friendly manner a large list of rejection texts. Furthermore the user may not be knowledgeable of all languages used by his contacts. This point is all the more problematic when the user country is a multilingual country like Canada or Switzerland.

Today there is still a need for a rejection feature solution that allows a user of a telecommunication network to easily handle rejection messages in a multilingual environment. There is a further need for a solution that does not require the user to understand a plurality of different languages.

### SUMMARY OF THE PRESENT SYSTEM AND METHOD:

It is an object of the present system, processor and method to overcome disadvantages and/or make improvements in the prior art.

To that extent, the present method proposes a method to silently inform a calling party through a rejection function that its incoming call will not be answered, according to claim 1.

Thanks to the present method, a method is provided to interact with a rejection function in a first language, which may for instance correspond to a preferred language for the callee. Thus the rejection messages from the rejection function are limited to this first language. When required, i.e. through identifying that the language of calling party is a second language different than the first language, the rejection function is then provided in this second language.

Through the present method, the callee may not be knowledgeable about the second language as the rejection message in the second language may be provided to the calling party A telecommunication device according to claim 4, well as a computer readable carrier including computer program instructions according to claim 7, will be also described here after.

### BRIEF DESCRIPTION OF THE DRAWINGS:

The present telecommunication system, telecommunication device and method are explained in further detail, and by way of example, with reference to the accompanying drawings wherein:
FIG. 1 shows an illustration of a known call rejection function available on a telecommunication device,
FIG. 2 shows an exemplary embodiment of the present system,
FIG. 3 shows a flow chart illustrating an exemplary embodiment of the present method,
FIG. 4 shows an exemplary embodiment of a GUI according to the present system,
FIGs. 5A-C show additional GUIs according to another exemplary embodiment of the present system, and;
FIG. 6 shows an alternative embodiment of the present system.

### DETAILED DESCRIPTION OF THE PRESENT SYSTEM AND METHOD:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, base stations, gateways or other entities in a telecommunication network are not detailed as their implementation is beyond the scope of the present system and method.

Unless specified otherwise, the exemplary embodiment will be described hereafter in its application to mobile telecommunication devices, or mobile devices in short, each mobile device comprising a SIM (subscriber identify module) to identify itself as a subscriber to a 3G cellular telecommunication network. This illustration is in no way a limitation of the scope of the present method and system as other telecommunication devices may be provided with the present call rejection function, such as landline telecommunication device, devices behind a PBX (Private Branch eXchange) network, mobile devices from different telecommunication networks, ...

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. For example, an operative coupling may include a wired and/or wireless coupling to enable communication between a telecommunication device and a server such as a voicemail server. An operative coupling may also relate to an interaction between program portions and thereby may not describe a physical connection so much as an interaction based coupling.

Furthermore, what will be referred to as a "call" in this description may be a standard voice call or any other session established between a first party A, referred to a user A, or the calling party, and another (second) party referred to as user B, or the called party. One will understand of course that the call is placed more precisely between the users telecommunication devices, i.e. the calling device and the called device, for instance a video call placed by user A to user B. Each side of the call in the telecommunication network will be referred to a branch or a leg of the call.

Unless mentioned otherwise, the present teachings will be illustrated to rejection messages such as SMS (Short Message Service), or MMS (Multimedia Messaging Service) for instance. Such teachings, as described later on, may be transposed to voice messages.

In addition, it should be expressly understood that the drawings are included for illustrative purposes and do not represent the scope of the present system.

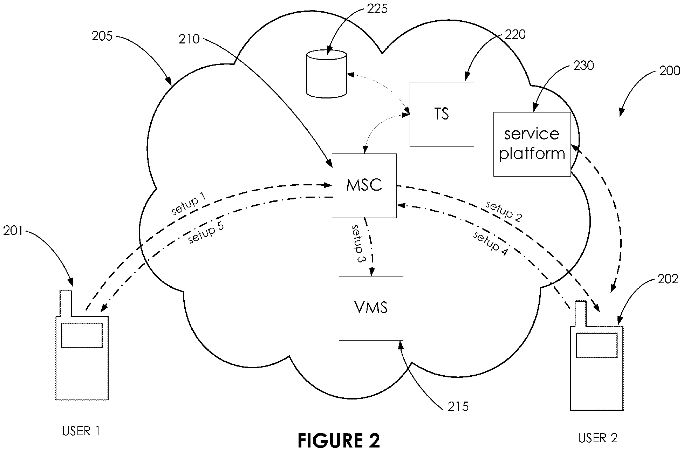

FIG. 2 illustrates a known exemplary of the present telecommunication system 200. A first telecommunication device 201 (attached to a first user A) is calling a second telecommunication device 202 (attached to a second user B) through a telecommunication network 205. User A is thus the caller or calling party while user B is the callee or called party. User B is a subscriber to telecommunication network 205 and thus enjoys a number of enhanced communication features such as voicemail and call rejection. User A may also be a subscriber to telecommunication network 205 or from another network.

Telecommunication network 205 comprises an MSC 210 (mobile switching center) responsible for handling voice calls and SMS as well as other services (such as conference calls, FAX and circuit switched data). MSC 210 may further be operatively connected to a voicemail server (VMS) 215 providing a voice message service to subscribers of network 205.

A translation server 220 is also provided for enabling the translation of messages in different languages as illustrated hereafter.

In order to enable the call rejection function on telecommunication device 202 of user B, a call rejection client or agent may be downloaded onto the device 202 from a service platform 230 providing in telecommunication network 205 a plurality of additional communication features. The call rejection function may for instance be offered to user B through registration with the service platform 230, and after subscription, the call rejection client may be downloaded to telecommunication device 202. This client, a software program comprising instructions to implement the present method, may be operable to:
- present and provide a call rejection function as known from existing solutions, the rejection function comprising the provision of at least one rejection message to the calling party. The rejection function may be activated voluntarily through a user input (for instance upon entering a meeting) prior to receiving any call or through an incoming call from user A. User B may then be presented with a popup window for activating the function, or hanging up the call will cause the activation of the feature. The rejection function is presented in a first language, which may for instance be the default language of the phone, or a language chosen by user B, as seen in FIG. 1 for instance,
- reject an incoming call, when the rejection function is activated, and a rejection entry is provided by user B. The rejection entry may for instance result from the pressing of the hang up key, or the selection in a menu of the rejection of the incoming call,
- cause the rejected incoming call to be transferred to the voicemail server 215. This may be achieved through a setup message returned by telecommunication device 202 to MSC 210. MSC 210 will then connect the call from user A with the voicemail server 215 so that user A may leave a voice message,
- provide the rejection function in an alternative second language when the language from the caller is identified as different from the first language. As explained here after through different user cases, the rejection messages in the second language may be stored on the telecommunication device 202 or may be translated by the translation server 220 when provided to the calling party,
- identify the second language. The identification may be achieved through an input from user B. User B may for instance identify the calling party through his caller ID and as he knows that user A speaks this second language, he may provide the information to the agent. Alternatively, the identification may be automatic, through either the caller ID (country code) or through a lookup in the contact list, provided user B had previously associated this contact corresponding to user A with a language data.

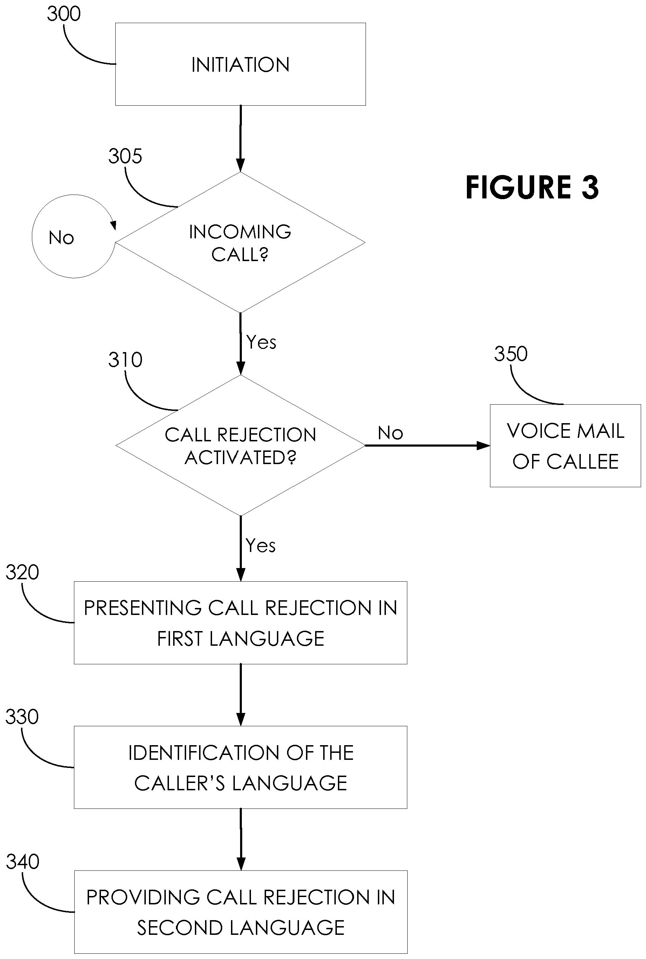

FIG. 3 shows an exemplary embodiment of the present method. In a preliminary act 300, the user B may register with the service platform 230 to download therefrom the call rejection agent. User B may if necessary activate the agent so that it can start monitoring incoming calls (case not illustrated in FIG. 3). Alternatively, the agent may be activated when the user hangs up on an incoming call as illustrated in FIG. 3. Different approaches are readily available to the man skilled in the art to activate the call rejection function and are beyond the scope of the present method.

Provided the telecommunication device 202 from user B receives an incoming call from user A (Yes to act 305), and that user B activates the call rejection function (Yes to act 310 by pressing the hang up key for instance), the call rejection function will be presented to user B in a first language. This first language may for instance corresponds to a default language as defined by the user or the default language of the SIM card. A call rejection function, as mentioned before, comprises the provision to the caller, user A, of a rejection message selected by the callee. FIG. 4 illustrates an exemplary embodiment of a GUI (graphical user interface) 411 of the call rejection function according to the present system and presented to the user B. The GUI 411, or menu of the rejection function may comprise a list of messages (herein illustrated as texts) selectable by user B as possible rejection texts to silently inform the caller that he will not be able to answer the call. The lists of rejection texts is presented in the first language. As for known call rejection functions, the list of texts can be edited, with new additions from the user depending on his needs. Furthermore, the texts of the list may only display a limited number of characters from the actual texts so as to give enough information to user B to select the right rejection text over a limited number of lines from the GUI 411. By presenting the call rejection function to the user B, one may understand the presentation of one or more of the rejection messages that can be sent to the caller A.

If the rejection function is not activated (No to act 310), the incoming call will be transferred to the voicemail of user B.

In a further act 330, the caller may be identified as a speaker of a different language. The identification may be:
- provided by user B through a user input on the called device 202. The user input may be for instance the selection of the "other languages" option on menu 412 as seen in FIG. 4,
- based on the caller ID of the calling party, provided the caller ID is available on the callee telecommunication device 202. In an additional embodiment of the present method, the called device 202 comprises a contact list, each contact being associated to a caller ID and a language for said contact. Then the calling party's language corresponds to the language of the contact associated to the caller ID of the calling party. The call rejection agent will retrieve the language through a simple lookup of the caller ID of the incoming call in the contact list. To that effect a language field for each contact stored in the contact list may be provided to add a language information, corresponding for instance to a preferred language for this contact. The language field may be for instance provided by user B, be updated from the network, or provided by user A when sending contact information. In an alternative embodiment as illustrated here after, provided the caller ID comprises a country code, the identification of the language may be based on the country code, each country code being associated to a preferred language. When the country code is involved, the identification of the second language may be mobile based or server based, i.e. the translation server, as illustrated here after, will use the caller ID to determine the second language.

In a further act 340, once the second language has been identified, the call rejection function will be provided in this second language. Different implementations may be envisaged in order to facilitate the provision of the call rejection function in the second language, as illustrated here after.

In an additional embodiment of the present method, the user B may chose to defined his own messages in each language. As not all users may have the necessary knowledge of other languages required for this implementation, a translation server 220 as seen in FIG. 2 may be provided to help a user with the translation of all the rejection messages. The translation of the rejection messages may be either stored on the telecommunication device of user B or handled when necessary by the translation server 220.

Provided the rejection messages are all stored on the telecommunication device of user B, the call rejection agent is further operable to:
- send a translation request to the translation server 220 each time the user updates his list of rejection messages, the translation may be available in different second languages, if the user has opted for more then one alternative language,
- register with the service platform 230 a request for a new language to increase the possible alternative languages. Each language available to the user may be either passed on as parameters to the translation server 220 for each translation request. The translation server 220 may alternatively be operably coupled to the service platform 230 to keep track of the registered languages for user B. Each time a new language is registered, the agent may send all stored messages for translation into the new language.

Thus for all stored messages in the first language, a corresponding translation is also stored for all languages chosen for the call rejection function of the present system.

FIGs. 5.1 to 5.3 are illustrations of an exemplary embodiment of the present method. This embodiment corresponds to the different setup messages shown in FIG. 2. The setup messages allow to connect and disconnect a call. Setup 1 and setup 2 messages correspond respectively to the first leg and second leg of the call from user A to user B. Setup 3 message from telecommunication device 202 informs MSC 210 that the call from user A will be transferred to the voicemail server 215. Setup 4 allows user A to be put into contact with the voicemail server so as to leave user B a message.

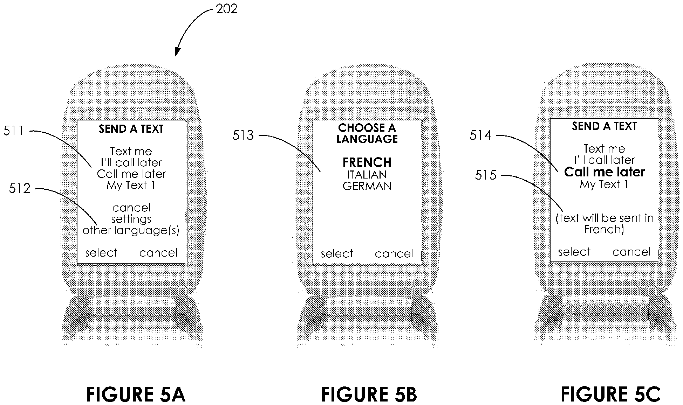

In FIG. 5A, assuming the call rejection function is activated, the GUI 511 is displayed once an incoming call has been detected. The rejection function is presented to the user B in the first language. The user B may choose to send the message in the first language at this stage, even if an alternative language is identified for the caller. When the identification of the second language results from a user input, the user B may select the "other language(s)" option 512. As second GUI 513, as seen in FIG. 5B is then displayed on the telecommunication device 202 screen, with a choice among the available languages. Here French is selected (bolded characters) by user B as the second language. The call rejection function can subsequently be provided is this second language as illustrated in FIG. 5C. The provision will comprise:
- the presentation of a GUI 514 showing the same rejection texts as before. Any selection of a given rejection text in the first language (e.g. "call me later" in bold characters on GUI 514) will cause telecommunication device 202 to provide to the calling party of a rejection message in the second language corresponding to the rejection message selected in the first language. As illustrated in FIG. 5C, the GUI 514 may include an indication 515 of the identified (presently user selected) second language, so as to confirm to the user B that only a translation in the second language of the selected text will be sent,
- sending the selected text in the second language to the calling party.

Even if the call rejection function may appear to user B as presented in the first language, it is actually provided to the first user A in the second language. As in this illustration, all texts are stored on the telecommunication device 202, the translation server 202 does not intervene in the provision of the call rejection function.

In an alternative embodiment of the present method, the identification of the second language may be based on the caller ID of the incoming call, as described before. Provided the user B selects option 512 "other language(s)" on GUI 511 of FIG. 5A, the call rejection agent will proceed directly with presenting GUI 514 of FIG. 5C. The indication 515 will then mention the second language identified through the caller ID, and corresponding to the language in which the call rejection function is provided.

In another alternative embodiment of the present method, only the messages in the first language may be stored on the telecommunication device 202. Whether the identification is based on a user input or the caller ID, the user B may be presented the same GUIs as illustrated in FIGs. 5.1 to 5.3. The provision of the call rejection function in the second language will comprise:
- the presentation of the GUI 514 (as in FIG. 5C) showing the same rejection texts as with GUI 512 (as in FIG. 5A),
- the provision to the translation server 220 of the identified second language and the rejection message selected in the first language, the translation server 220 providing a translation of the selected rejection message to the calling party. The recipient of the translated message, i.e. the calling party, is also provided to the translation server 220.

Any selection of a given rejection text in the first language will still cause the telecommunication device 202 to provide to the calling party of a rejection message in the second language corresponding to a rejection message selected in the first language. Nevertheless, the provision will only be indirect as the translation server will ensure the translation "on demand" from the telecommunication device 202. In other words, telecommunication device 202 initiates the provision of the rejection function in the second language. Once the message is translated, the translated message is sent by the translation server for instance through the MSC to the calling party as the recipient.

In an alternative embodiment of the present method, the identification of the second language may be handled by the translation server. In this case, the user never gets to see what is the second language, the translation server relying upon the caller ID to determine it. The translation server may also access a copy of the contact list from user B to retrieve the language field and determine the second language.

Alternatively, for instance when the second user B is fluent in the second language, the GUI 514 of FIG. 5C may display the messages in the second language, the indication 515 will then not be displayed.

In the description here above, reference was made to call rejection texts. The present teaching may be applied to call rejection voice messages. Such message may be displayed on a GUI of the call rejection function through a title summarizing their content to the user. A user may generate as many new voice messages as needed in the first language and associated them to titles so that they can be viewed through a list as in GUI 511 and 514. The translation server 220 is then operable to translate a voice message into another language. Thus the user could enjoy the possibility of choosing between text and voice messages to inform the calling party that his incoming call will not be answered.

The selection of the different rejection messages as well as the other language option may be performed through a keypad or a touch sensitive screen for instance.

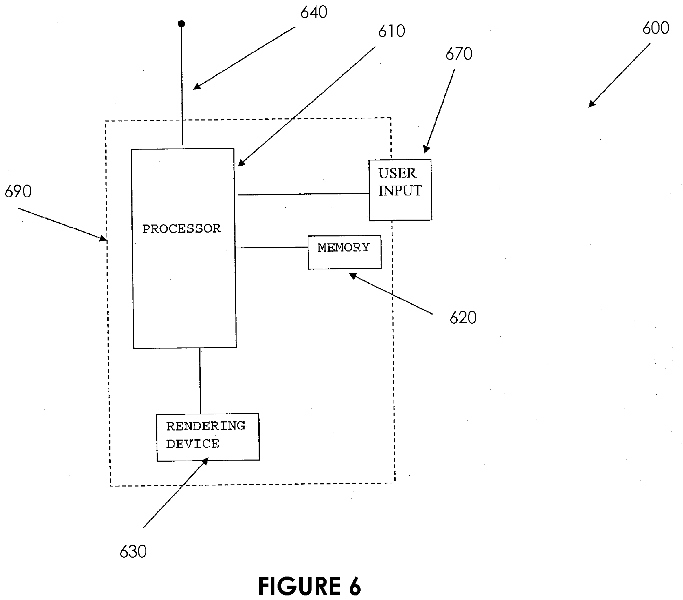

FIG. 6 shows a system 600 in accordance with an embodiment of the present system. The system 600 includes a telecommunication device 690 that has a processor 610 operationally coupled to a memory 620, a rendering device 630, such as one or more of a display, speaker, etc., a user input device 670, such as a keypad, and a connection 680 operationally coupled to the user device 690. The connection 680 may be an operable connection between the device 690, as a user device, and another device that has similar elements as the device 690, such as a translation server or an MSC. The user device may be for instance a mobile phone, a smart phone, a PDA (personal digital assistant) or any type of wireless device.

The memory 620 may be any type of device for storing application data as well as other data, such as the call rejection agent, user historical data, such as a user profile, call rejection messages, in one or more languages, etc. The application data and other data are received by the processor 610 for configuring the processor 610 to perform operation acts in accordance with the present system. The operation acts include the presentation of the call rejection function in the first language, as well as the provision of this function in the second language once identified. The user input 670 may include a sensor panel as well as a keyboard, mouse, trackball or other devices, which may be stand alone or be a part of a system, such as part of a personal computer (e.g., desktop computer, laptop computer, etc.) personal digital assistant, mobile phone, converged device, or other rendering device for communicating with the processor 610 via any type of link, such as a wired or wireless link. The user input device 670 is operable for interacting with the processor 610 including interaction within a paradigm of a GUI and/or other elements of the present system, such as left and right clicking or touch on displayed menu, a pop-up menu, etc., as may be readily appreciated by a person of ordinary skill in the art.

In accordance with an embodiment of the present system, the rendering device 630 may operate as a touch sensitive display for communicating with the processors 610 (e.g., providing selection of a call rejection message, etc.). In this way, a user may interact with the processor 610 including interaction within a paradigm of a GUI, such as to operation of the present system, device and method. Clearly the user device 690, the processor 610, memory 620, rendering device 630 and/or user input device 670 may all or partly be portions of a computer system or other device, and/or be embedded in a portable device, such as a mobile telephone, personal computer (PC), personal digital assistant (PDA), converged device such as a smart telephone, etc.

The system, device and method described herein address problems in prior art systems. In accordance with an embodiment of the present system, the device 690, corresponding user interfaces and other portions of the system 600 are provided for providing an enhanced call rejection functions in a multilingual environment.

The methods of the present system are particularly suited to be carried out by a computer software program, such program containing modules corresponding to one or more of the individual steps or acts described and/or envisioned by the present system, such as the presentation of the rejection function in the first and second languages. Such program may of course be embodied in a computer-readable medium, such as an integrated chip, a peripheral device or memory, such as the memory 620 or other memory coupled to the processor 610.

The computer-readable medium and/or memory 620 may be any recordable medium (e.g., RAM, ROM, removable memory, CD-ROM, hard drives, DVD, floppy disks or memory cards) or may be a transmission medium utilizing one or more of radio frequency (RF) coupling, Bluetooth coupling, infrared coupling, etc. Any medium known or developed that can store and/or transmit information suitable for use with a computer system may be used as the computer-readable medium and/or memory 620.

Additional memories may also be used. These memories configure processor 610 to implement the methods, operational acts, and functions disclosed herein. The operation acts may include controlling the rendering device 630 to display the available rejection messages in a form of a GUI and/or controlling the rendering device 630 to render other information in accordance with the present system.

Moreover, the term "memory" should be construed broadly enough to encompass any information able to be read from or written to an address in the addressable space accessed by a processor. With this definition, information on a network is still within memory 620, for instance, because the processor 610 may retrieve the information from the network for operation in accordance with the present system. For example, a portion of the memory as understood herein may reside as a portion of the translation server and/or the user device.

The processor 610 is capable of providing control signals and/or performing operations in response to input signals from the user input device 670 and executing instructions stored in the memory 620. The processor 610 may be an application-specific or general-use integrated circuit(s). Further, the processor 610 may be a dedicated processor for performing in accordance with the present system or may be a general-purpose processor wherein only one of many functions operates for performing in accordance with the present system. The processor 610 may operate utilizing a program portion, multiple program segments, or may be a hardware device utilizing a dedicated or multi-purpose integrated circuit.

Finally, the above-discussion is intended to be merely illustrative of the present system and should not be construed as limiting the appended claims to any particular embodiment or group of embodiments. Thus, while the present system has been described with reference to exemplary embodiments, it should also be appreciated that numerous modifications and alternative embodiments may be devised by those having ordinary skill in the art without departing from the broader and intended scope of the present system as set forth in the claims that follow.

The section headings included herein are intended to facilitate a review but are not intended to limit the scope of the present system. Accordingly, the specifications and drawings are to be regarded in an illustrative manner and are not intended to limit the scope of the appended claims.

In interpreting the appended claims, it should be understood that:
a) the words "comprising" or "including" do not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analogue and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method for rejecting an incoming call from a calling party (201), comprising, at a called device (202):
- receiving the incoming call from a calling device of the calling party (201),
- upon detection of an activation of a call rejection function, presenting through a user interface a list of messages to be sent to the calling device (201), said messages being presented in a first language,
- selecting one message to be sent to the calling device,
**characterised in that** the called device (202) comprises a contact list in which each contact is associated with a caller ID and a language, the calling party's language corresponding to the language of the contact associated to the caller ID of the calling party (201),
- determining, based on a caller identifier, ID, associated with the calling party, a second language different from the first language in which the selected message is to be sent to the calling device of the calling party (201),
- sending the selected message in the second language to the calling device of the calling party (201).

2. A method according to claim 1, wherein the rejection messages in both the first and second languages are stored on the called device (202).

3. A method according to claim 1, further comprising:
- providing to a translation server (220) the selected message in the first language and the determined second language, and
- receiving from the translation server (220) a translation of the selected message in the second language to be sent to the calling device (201).

4. A telecommunication device (202, 690) capable of rejecting an incoming call from a calling party (201), said telecommunication device (202, 690) comprising a processor (610) operatively coupled to a memory (620), a rendering device (630), and a user input device (670), wherein the processor (610) is being operable to :
- receive the incoming call from the calling device of the calling party (201),
- upon detection of an activation of a call rejection function, present through the rendering device (630) a list of messages to be sent to the calling device (201), said messages being presented in a first language),
- select one message to be sent to the calling device, **characterised in that** the called device (202) comprises a contact list in which each contact is associated with a caller ID and a language, the calling party's language corresponding to the language of the contact associated to the caller ID of the calling party (201),
- determine, based on a caller identifier, ID, associated with the calling party, a second language different from the first language in which the selected message is to be sent to the calling device of the calling party (201), and
- send the selected message in the second language to the calling device of the calling party (201).

5. A telecommunication device (202) according to claim 4, wherein the selected message sent to the calling device (201) in the second language corresponds to a message selected in the first language.

6. A telecommunication device (202) according to claim 4. wherein the processor (610) is further operable to provide to a translation server (220) the message selected in the first language and the determined second language, and to receive from the translation server (220) a translation of the selected message to be sent to the calling device (201).

7. A computer readable carrier including computer program instructions that cause a computer to implement a method for rejecting an incoming call from a calling party (201) according to claims 1 to 4.

## Patentansprüche

1. Verfahren zum Zurückweisen eines eingehenden Anrufs von einem Anrufer (201), das in einer angerufenen Vorrichtung (202) umfasst:
- Empfangen des eingehenden Anrufs von einer Anrufvorrichtung des Anrufers (201),
- nach dem Erkennen einer Aktivierung einer Anrufzurückweisungsfunktion, Darstellen in einer Benutzeroberfläche einer Liste von Nachrichten, zum Senden an die Anrufvorrichtung (201), wobei die Nachrichten in einer ersten Sprache dargestellt werden,
- Auswählen einer Nachricht zum Senden an die Anrufvorrichtung,
**dadurch gekennzeichnet, dass** die angerufene Vorrichtung (202) eine Kontaktliste umfasst, in der jedem Kontakt eine Anruferkennung und eine Sprache zugeordnet ist, wobei die Sprache des Anrufers der Sprache des Kontakts entspricht, die der Anruferkennung des Anrufers (201) zugeordnet ist,
- Ermitteln aufgrund einer Anruferkennung, die dem Anrufer zugeordnet ist, einer zweiten Sprache, die verschieden von der ersten Sprache ist, in der die ausgewählte Nachricht an die Anrufvorrichtung des Anrufers (201) gesendet werden soll,
- Senden der ausgewählten Nachricht in der zweiten Sprache an die Anrufvorrichtung des Anrufers (201) .

2. Verfahren nach Anspruch 1, wobei die Zurückweisungsnachrichten sowohl in der ersten als auch in der zweiten Sprache in der angerufenen Vorrichtung (202) gespeichert werden.

3. Verfahren nach Anspruch 1, das außerdem umfasst:
- Bereitstellen der ausgewählten Nachricht in der ersten Sprache und der ermittelten zweiten Sprache für einen Übersetzungsserver (220), und
- Empfangen von dem Übersetzungsserver (220) einer Übersetzung der ausgewählten Nachricht in der zweiten Sprache, die an die Anrufvorrichtung (201) gesendet werden soll.

4. Telekommunikationsvorrichtung (202, 690), die in der Lage ist, einen eingehenden Anruf von einem Anrufer (201) zurückzuweisen, wobei die Telekommunikationsvorrichtung (202, 690) einen Prozessor (610), der funktionsfähig mit einem Speicher (620) verbunden ist, eine Wiedergabevorrichtung (630); und eine Benutzereingabevorrichtung (670) umfasst, wobei der Prozessor (610) funktionsfähig ist zum:
- Empfangen des eingehenden Anrufs von der Anrufvorrichtung des Anrufers (201),
- nach dem Erkennen einer Aktivierung einer Anrufzurückweisungsfunktion, Darstellen durch die Wiedergabevorrichtung (630) einer Liste von Nachrichten, zum Senden an die Anrufvorrichtung (201), wobei die Nachrichten in einer ersten Sprache dargestellt werden,
- Auswählen einer Nachricht zum Senden an die Anrufvorrichtung,
**dadurch gekennzeichnet, dass** die angerufene Vorrichtung (202) eine Kontaktliste umfasst, in der jedem Kontakt eine Anruferkennung und eine Sprache zugeordnet ist, wobei die Sprache des Anrufers der Sprache des Kontakts entspricht, die der Anruferkennung des Anrufers (201) zugeordnet ist,
- Ermitteln aufgrund einer Anruferkennung, die dem Anrufer zugeordnet ist, einer zweiten Sprache, die verschieden von der ersten Sprache ist, in der die ausgewählte Nachricht an die Anrufvorrichtung des Anrufers (201) gesendet werden soll, und
- Senden der ausgewählten Nachricht in der zweiten Sprache an die Anrufvorrichtung des Anrufers (201).

5. Telekommunikationsvorrichtung (202) nach Anspruch 4, wobei die ausgewählte Nachricht, die in der zweiten Sprache an die Anrufvorrichtung (201) gesendet wird, einer Nachricht entspricht, die in der ersten Sprache ausgewählt wird.

6. Telekommunikationsvorrichtung (202) nach Anspruch 4, wobei der Prozessor (610) außerdem funktionsfähig ist zum Bereitstellen der ausgewählten Nachricht in der ersten Sprache und der ermittelten zweiten Sprache für einen Übersetzungsserver (220), und zum Empfangen von dem Übersetzungsserver (220) einer Übersetzung der ausgewählten Nachricht, die an die Anrufvorrichtung (201) gesendet werden soll.

7. Computerlesbares Trägersignal, das Computerprogrammbefehle aufweist, die einen Computer veranlassen, ein Verfahren zum Zurückweisen eines eingehenden Anrufs von einem Anrufer (201) nach einem der Ansprüche 1 bis 4 umzusetzen.

## Revendications

1. Procédé de rejet d'un appel entrant provenant d'une partie appelante (201) comprenant, au niveau d'un dispositif appelé (202) :
- la réception de l'appel entrant provenant d'un dispositif appelant de la partie appelante (201),
- lors de la détection d'une activation d'une fonction de rejet d'appel, la présentation par le biais d'une interface utilisateur d'une liste de messages à envoyer au dispositif appelant (201), lesdits messages étant présentés dans une première langue,
- la sélection d'un message à envoyer au dispositif appelant,
**caractérisé en ce que** le dispositif appelé (202) comprend une liste de contacts dans laquelle chaque contact est associé à un identifiant d'appelant et à une langue, la langue de la partie appelante correspondant à la langue du contact associé à l'identifiant de l'appelant de la partie appelante (201),
- la détermination, sur la base d'un identifiant, ID, d'appelant, associé à la partie appelante, d'une seconde langue différente de la première langue dans laquelle le message sélectionné doit être envoyé au dispositif appelant de la partie appelante (201),
- l'envoi du message sélectionné dans la seconde langue au dispositif appelant de la partie appelante (201).

2. Procédé selon la revendication 1, dans lequel les messages de rejet à la fois dans les première et seconde langues sont stockés sur le dispositif appelé (202) .

3. Procédé selon la revendication 1, comprenant en outre :
- la fourniture à un serveur de traduction (220) du message sélectionné dans la première langue et la seconde langue déterminée, et
- la réception à partir du serveur de traduction (220) d'une traduction du message sélectionné dans la seconde langue à envoyer au dispositif appelant (201).

4. Dispositif de télécommunication (202, 690) capable de rejeter un appel entrant provenant d'une partie appelante (201), ledit dispositif de télécommunication (202, 690) comprenant un processeur (610) couplé de manière opérationnelle à une mémoire (620), à un dispositif de restitution (630) et à un dispositif d'entrée d'utilisateur (670), le processeur (610) étant opérationnel pour :
- recevoir l'appel entrant provenant du dispositif appelant de la partie appelante (201),
- lors de la détection d'une activation d'une fonction de rejet d'appel, présenter à travers le dispositif de restitution (630) une liste de messages à envoyer au dispositif appelant (201), lesdits messages étant présentés dans une première langue,
- sélectionner un message à envoyer au dispositif appelant,
**caractérisé en ce que** le dispositif appelé (202) comprend une liste de contacts dans laquelle chaque contact est associé à un identifiant d'appelant et à une langue, la langue de la partie appelante correspondant à la langue du contact associé à l'identifiant d'appelant de la partie appelante (201),
- déterminer, sur la base de l'identifiant, ID, d'appelant, associé à la partie appelante, une seconde langue différente de la première langue dans laquelle le message sélectionné doit être envoyé au dispositif appelant de la partie appelante (201), et
- envoyer le message sélectionné dans la seconde langue au dispositif appelant de la partie appelante (201).

5. Dispositif de télécommunication (202) selon la revendication 4, dans lequel le message sélectionné envoyé au dispositif appelant (201) dans la seconde langue correspond à un message sélectionné dans la première langue.

6. Dispositif de télécommunication (202) selon la revendication 4, dans lequel le processeur (610) est opérationnel en outre pour fournir à un serveur de traduction (220) le message sélectionné dans la première langue et la seconde langue déterminée, et pour recevoir à partir du serveur de traduction (220) une traduction du message sélectionné à envoyer au dispositif appelant (201).

7. Support lisible par ordinateur comprenant des instructions de programme informatique qui amènent un ordinateur à mettre en œuvre un procédé de rejet d'un appel entrant provenant d'une partie appelante (201) selon les revendications 1 à 4.
